# EUROPÄISCHE PATENTSCHRIFT

(11) **EP 0 343 408 B1**
(45) Veröffentlichungstag und Bekanntmachung des Hinweises auf die Patenterteilung: **07.01.1993**
(21) Anmeldenummer: 89108128.3
(22) Anmeldetag: 05.05.1989
(51) Int. Cl.: H01M 4/52, H01M 4/62, H01M 4/26

(54) **Wässrige Nickelhydroxid-Paste hoher Fliessfähigkeit**
Aqueous paste of nickel hydroxide with a high fluidity
Pâte aqueuse en hydroxyde de nickel à haute fluidité

(30) Priorität: 26.05.1988 DE 3817826
(43) Veröffentlichungstag der Anmeldung: 29.11.1989
(73) Patentinhaber: DEUTSCHE AUTOMOBILGESELLSCHAFT MBH, 73733 Esslingen (DE)
(72) Erfinder: von Benda, Klaus, Dr., D-7440 Nürtingen (DE); Benczùr-Ürmössy, Gábor, Dr., D-7000 Stuttgart 1 (DE); Berger, Gerhard, Dr., D-7301 Deizisau (DE)

(56) Entgegenhaltungen:
- FR-A- 2 618 949
- PATENT ABSTRACTS OF JAPAN, Band 11, Nr. 363 (E-560)[2810], 26. November 1987; & JP-A-62 136 761 (MATSUSHITA ELECTRIC IND. CO. LTD) 19-06-1987
- PATENT ABSTRACTS OF JAPAN, Band 11, Nr. 254 (E-533)[2701], 18. August 1987; & JP-A-62 64 062 (YUASA BATTERY CO. LTD) 20-03-1987
- PATENT ABSTRACTS OF JAPAN, Band 12, Nr. 158 (E-608)[3005], 13. Mai 1988; & JP-A-62 271 346 (SANYO ELECTRIC CO. LTD) 25-11-1987
- PATENT ABSTRACTS OF JAPAN, Band 8, Nr. 74 (E-236)[1511], 6. April 1984; & JP-A-58 223 262 (SANYO DENKI K.K.) 24-12-1983
- PATENT ABSTRACTS OF JAPAN, Band 8, Nr. 70 (E-235)[1507], 3. April 1984; & JP-A-58 220 359 (SANYO DENKI K.K.) 21-12-1983
- Lexikon der Hilfstoffe: H.P. Fiedler, s. 144 EDITO CANTOR AULENDORF.

## Beschreibung

Gegenstand der Erfindung ist eine wässrige Nickelhydroxid-Paste hoher Fließfähigkeit für die Vibrationsfüllung von Schaum- und Faserstruktur-Elektrodengerüsten.

Technische Nickeloxidelektroden (die korrekten Bezeichnungen sind Nickelhydroxid- oder Nickeloxidhydroxidelektroden) lassen sich nach der Bauart in Röhrchenelektroden, Taschenplattenelektroden, Sinternickelelektroden und Fasergerüstelektroden aufteilen. In der besonderen Ausführungsform der Knopfzelle wird eine runde Elektrode aus gepreßter Aktivmasse, eine sogenannte Presselektrode verwendet. Plastgebundene Elektroden haben keine größere Bedeutung erlangt. Auch die sogenannte "Controlled-Micro-Geometry"-Elektrode, bei der Schichten von Nickelhydroxidmasse zwischen einer Vielzahl von perforierten Nickelfolien gehalten werden, haben keine Verbreitung erlangt. Bei der Röhrchenelektrode wird das vorgefertigte Nickelhydroxid in Pulverform eingestampft, bei der Taschenplattenelektrode verwendet man vorgefertigte Presslinge, sogenannte Briketts. Bei dem engporigen Sinternickelgerüst bildet man die aktive Nickelhydroxidmasse in situ in den Poren durch Ausfällung aus Nickelsalzlösungen auf chemischem Weg (mit Alkalien) oder auf elektrochemischem Weg (kathodische Polarisierung). Durch den chemischen Fällungsprozess erzielt man die notwendige Konzentration von Nickelhydroxid in den Poren erst durch mehrfache Wiederholung des Tränkens und Fällens mit zwischengeschaltetem Waschen und Trocknen. Mit dem elektrochemischen Verfahren gelingt die Füllung in einem Schritt, die Verweilzeit der Elektrodenplatte im Salzbad beträgt etwa 1 Stunde. Das Salzbad verändert allerdings seine Zusammensetzung und muß von Zeit zu Zeit verworfen werden. Beide Fällungsprozesse sind außerordentlich teuer, jedoch für Pulversintergerüste unumgänglich.

Seit etwa 15 Jahren werden vermehrt Schaumstrukturgerüste und Faserstrukturgerüste für die Halterung der aktiven Masse eingesetzt. Sie bestehen allein aus Metall oder sie enthalten noch den strukturgebenden Grundkörper aus Kunststoff oder Kohlenstoff Die Imprägnierung mit aktiver Masse erfolgt normalerweise mit einem Fällungsverfahren, aber es sind auch mechanische Füllverfahren mit vorgefertigter Masse beschrieben worden, die durch die erheblich größere Porenweite gegenüber Pulversintergerüsten möglich geworden sind

Die erste Erwähnung einer Vibrationsfüllung von Schaum- und Fasergerüsten mit trockenem pulverförmigem Eisensulfid für Lithium-Schwefel-Zellen findet sich in der US-PS 39 33 520 Pulvriges, trockenes Nickelhydroxid eignet sich nicht für ein derartiges Wirbelbettverfahren. Die Schüttdichte mit Werten zwischen 0,4 und 1 g/cm³ liegt zu niedrig, die Fließeigenschaften sind ungünstig und die Gesundheitsgefährdung ist hoch. Es wurde daher bereits versucht, diese Nachteile durch Verwendung von Nickelhydroxid-Suspensionen zu vermeiden.

Die Tauglichkeit von Nickeloxidelektroden wird unter anderem danach beurteilt, wieviel Masse im Elektrodenvolumen untergebracht ist. Im allgemeinen wird ein Bereich von 1,2 bis 2,2 g Nickelhydroxid/cm³ Leervolumen in der Literatur als brauchbar angesehen (z. B. G. Crespy, R. Schmitt, M.A. Gutjahr und H. Säufferer in Power Sources 7,Seite 219 und Seite 225, Academic Press 1979). Allerdings bewähren sich sehr hohe Füllgrade um 2 g/cm³ durch die starke Dehnung der Elektrode nicht. Mit der Dichte von Nickelhydroxid (3,94 g/cm³) ergibt sich, daß eine Paste (Suspension, Aufschlämmung),durch die der angegebene Bereich von 1,2 bis 2,2 g Nickelhydroxid/cm³ in einem einzigen Füllvorgang erreicht werden soll, einen Volumenanteil an Nickelhydroxid von mindestens 30,5 % aufweisen muß.

In der DE-OS 24 27 421 wurde vorgeschlagen,frisch gefälltes Nickelhydroxid in seiner Mutterlauge suspendiert auf eine horizontal gelagerte Fasergerüstplatte einwirken zu lassen Das Anlegen von Vakuum auf die Unterseite der Platte und die Anregung durch eine mit Ultraschall angetriebene Vibratorelektrode in der Suspension unterstützen das Eindringen von Nickelhydroxid in das Trägergerüst. Die Füllung ist jedoch nicht ausreichend, denn es erfolgt zusätzlich eine Tränkung mit Nickelnitratschmelze und eine chemische Fällung von weiterem Nickelhydroxid mittels Alkali. Dies ist nicht überraschend, da das Nickelhydroxid sehr voluminös mit erheblichen Mengen Kristallwasser und Anionenresten ausfällt und die notwendige Dichte und der Volumenanteil in der Suspension bei weitem nicht erreicht wird.

Das in der US-PS 4 217 939 beschriebene Verfahren geht von kommerziell erhältlichem Nickelhydroxidpulver mit einem Zusatz von 10 % Nickelpulver als Leithilfe aus. Es wird eine wässrige Paste mit 70 Gew.-% Trockenmassekonzentration gebildet, aus der sich ein Volumenanteil von 34,4 Vol.-% Nickelhydroxid ausrechnen läßt. Ein retikuliertes Schaumgerüst (Schaummetall) wird horizontal auf einer Lochplatte über den Pastenbehälter geführt, in welchem die Paste durch Rühren bewegt und aufwärts in und um das Gerüst gedrückt wird, während von oben Paste durch Rakeln in das Gerüst gestrichen wird. Vor der Imprägnierung ist eine Füllung der Poren des Gerüstes mit Wasser erforderlich, da ansonsten die Paste nicht in alle Poren gebracht werden kann Bedarfsweise wird noch weiteres trockenes Pulver auf die Oberfläche des Gerüstes aufgegeben um das Füllergebnis zu verbessern. Aus diesen Angaben ist ersichtlich, daß die Übertragung der Paste in die Poren nicht mit einem homogenen Arbeitsstoff gelingt. Die Konzentrationsänderungen (Verdrängung des in den Poren befindlichen reinen Wassers durch Paste, bzw. Aufstreuen von Pulver) erschweren die kontinuierliche Führung des Verfahrens.

In einer Veröffentlichung (W. A. Ferrando und W. W. Lee, Proc. of the 31. Power Sources Symposium 1984, Seite 177) wird ebenfalls von vorgefertigtem Nickelhydroxid ausgegangen, das mit Ethylenglycol zu einer Paste formuliert wird. Bei dem angegebenen Massenverhältnis von 1:3 ergibt sich nach einer Umrechnung in Volumenprozente ein Nickelhydroxid-Volumenanteil von 8,6 %. Die Paste (heavy cream) wird in ein Nickelfasergerüst eingerieben. Nach der Trocknung wird die Prozedur zwecks Erhöhung der Beladung wiederholt. Die Notwendigkeit hierfür ergibt sich aus der geringen Volumenkonzentration. Die Verwendung eines organischen Fluids anstelle von Wasser ist darüber hinaus unwirtschaftlich, eine Rückgewinnung des Fluids beim Trocknen ist erforderlich und es können darüber hinaus Entsorgungsprobleme für die auftretenden Lösemitteldämpfe auftreten.

In der japanischen Offenlegungsschrift (Kokai) 81 82 577 wird eine Paste aus Nickelhydroxid, Kobalthydroxid, Methylcellulose, vernickelten Polyäthylenfasern, Nickelpulver und Wasser auf eine vernickelte perforierte Eisenplatte aufgetragen und nach dem Trocknen auf die gewünschte Stärke kalandriert. Die Eigenschaft der Paste machen sie ungeeignet für die Füllung der Poren von Schaum- oder Faserstrukturelektrodengerüsten.

Die Aufgabe der Erfindung besteht darin, eine wässrige Nickelhydroxid-Paste hoher Fließfähigkeit für die Vibrationsfüllung von Schaum- und Faserstruktur-Elektrodengerüsten zu finden, mit der sich diese Gerüste in einem Arbeitsgang vollständig füllen lassen.

Diese Aufgabe wird durch die im Patentanspruch 1 beschriebene Paste gelöst.

Der hohe Gehalt an Nickelhydroxid von 30 bis 50 Vol.-% ist erforderlich, um in einem Füllschritt Elektroden herstellen zu können, die die nach den bisher eingeführten Verfahren in mehreren Schritten erreichbaren Aktivmassenkonzentrationen und damit volumenbezogene Kapazitätswerte aufweisen. Der besonders bevorzugte Bereich liegt zwischen 35 und 45 Vol.-%. Eine so hohe Konzentration läßt sich nur mit Hilfe von speziellen, sehr wirksamen Dispergatoren erzielen.

Ein derartiger Zusatz von Dispergatoren zu einer Aktivmassenpaste für die Vibrationsfüllung von Schaum- und Faserstrukturelektrodengerüsten wird in der EP-Anmeldung 341 492 bereits beschrieben. Der Aktivmassenpaste werden dabei Dispergatoren aus der Gruppe des wasserlöslichen Salze der Polyphosphorsäure zugesetzt, wobei Alkalisalze der Polyphosphorsäure bevorzugt sind.

Es wurde nun gefunden, daß eine wässrige Ni(OH)₂-Paste mit einem hohen Gehalt an Nickelhydroxid mit einer hohen Fließfähigkeit für die Vibrationsfüllung von Schaum- und Faserstruktur-Elektrodengerüsten geschaffen werden kann, indem die Paste auf einen pH-Wert von 9 bis 12 eingestellt wird und als Dispergator ein wasserlösliches Salz der Polyphosphorsäure mit 3 bis 20, insbesondere mit 6 bis 20 Phosphoratomen pro Molekül, der Paste zugesetzt wird. Als wasserlösliches Salz sind insbesondere dabei die Alkalisalze geeignet.

Auch wasserlösliche Salze, insbesondere Alkalisalze der Di- und Polyphosphonsäuren und ihrer Derivate sind geeignet.

Die Dispergatoren aus der Gruppe der Di- und Polyphosphonsäuren und ihrer Derivate sollen nicht mehr als zwei Kohlenstoffatome pro Phosphoratom im Molekül besitzen, da ansonsten durch die Umwandlung der Kohlenstoffatome im Verlauf der Elektrodenreaktionen zu Kohlendioxid eine übermäßig hohe Karbonatbildung im Elektrolyten auftreten würde. Besonders geeignet aus dieser Gruppe sind die 1-Hydroxiethan-1,1-diphosphonsäure (HEDP) oder die Aminotrimethylenphoshponsäure in Form ihrer Alkalisalze.

Die Natrium- und Kaliumsalze der 1-Hydroxiethan-1,1-diphosphonsäure (HEDP) zeigen eine stärker verflüssigende Wirkung in Nickeldydroxid-Pasten als die Polyphosphate, d.h. bei gleicher Viskosität enthält eine Paste mit HEDP-Salz als Dispergator mehr Nickelhydroxid bzw. bei gleichem Nickeldydroxidgehalt eine Paste mit HEDP-Salz als Dispergator eine geringere Viskosität. Im folgenden wird das 4-basige Säureanion als HEDP abgekürzt und die Protonen getrennt geschrieben. Während die freie Säure H₄ (HEPD) sehr zähe Pasten ergibt, liegt ein Optimum der Wirkung zwischen NaH₃ (HEDP) und Na₂H₂ (HEDP). Der pH-Wert der Paste liegt bei 10 bzw. 11,2 und damit innerhalb des beanspruchten Bereichs zwischen 9 und 12. Der pH-Wert der Paste mit Na₃H (HEDP) liegt bereits bei 12,1. Bei diesem Wert erreicht die CO₂-Aufnahme aus der Luft ein Ausmaß, das die Verwendung der gefüllten Elektrode in Speicherzellen gefährdet.

Eine überraschende weitere Steigerung der Nickelhydroxidkonzentration bzw. Senkung der Viskosität (Senkung der Fließgrenze bzw. der plastischen Viskosität) erzielt man durch die Verwendung eines Alkalimetall-Kobalt-Komplexes der 1-Hydroxiethan-1,1-diphosphonsäure. Innerhalb der allgemeinen Formel CoₓK_{y}H_{z} (HEDP) mit 2x + y + z = 4 sind folgende Bandbreiten zulässig: x = 0,5 bis 1,25, y = 0,5 bis 1,5 und z = 0,2 bis 2. Außerhalb dieser Bandbreiten ist der pH-Wert bereits zu hoch und die Fließgrenze steigt an. Die Herstellung des Fluids kann durch Auflösen von Kobalthydroxid in entsprechender Menge in wässriger 1-Hydroxiethan-1,1-diphosphonsäure und Zugabe einer entsprechenden Menge an Alkalilauge erfolgen.

Der Dispergator wird in Mengen von 0,5 bis 5 Gew.-%, bezogen auf Nickelhydroxid, insbesondere in Mengen von 1 bis 5 Gew.-% verwendet. Bei höherer Zugabe erhöht man lediglich die Zahl der in dem Elektrolyten später vorhandenen Fremdionen, ohne jedoch eine verbesserte Wirkung zu erzielen. Unterhalb von 0,5 Gew.-% ist die Wirkung des Dispergators in manchen Fällen schon zu gering und die Viskosität der Paste daher zu hoch.

Um in die Poren des Schaum- oder Faserstrukturgerüstes eindringen zu können, muß die Paste über eine ausreichende Fließfähigkeit verfügen.

Rheologisch gesehen gehört die erfindungsgemäße Nickelhydroxid-Paste zu den plastischen Körpern. Meist wird ein idealplastisches Verhalten gefunden (sogenannte Bingham-Körper). Die Viskosität ist keine Materialkonstante, sie läßt sich nur in einem Fließdiagramm darstellen (Schubspannung in Pa gegen Geschwindigkeitsgefälle in s⁻¹). Unterhalb einer bestimmten Schubspannung ist die Paste fest, sie besitzt eine Fließgrenze. Nach Überschreitung der Fließgrenze besteht beim idealplastischen Verhalten Linearität zwischen Schubspannung und Geschwindigkeitsgefälle Die plastische Viskosität ist der Quotient aus der durch die Fließgrenze verminderten Schubspannung und dem Geschwindigkeitsgefälle. Die Fließgrenze und die plastische Viskosität beschreiben das System vollständig. Zur Erläuterung der rheologischen Begriffe und Meßverfahren sei auf die Contraves-Firmenschrift "Messung rheologischer Eigenschaften" (Bulletin T 990 d-7309), Sektion 6.3 (Plastisches Fließverhalten),sowie auf die Veröffentlichung von A. Fincke und W. Heinz "Zur Bestimmung der Fließgrenze grobdisperser Systeme", Rheologica Acta, 1 (1961), 530, hingewiesen. Die Messungen erfolgten mit dem Rotationsviscosimeter Rotovisco RV 12 der Fa. Haake mit den Meßeinrichtungen NV und MV I. Es sollten Schergeschwindigkeiten (Geschwindigkeitsgefälle) von mindestens 100 s⁻¹ erreicht werden. Zur Auswertung wurde die Rücklaufkurve herangezogen. Die Messungen erfolgten bei 20 °C. Die Paste ist für das Füllen der Poren geeignet, wenn die Fließgrenze zwischen 10 und 120 Pa liegt, und die plastische Viskosität 0,1 bis 1 Pa.s beträgt, wobei der bevorzugte Bereich zwischen 0,15 und 0,25 Pa.s liegt. Die Paste soll bevorzugt eine leichte Thixotropie (Zeitabhängigkeit der Viskosität) aufweisen. Nach dem Füllvorgang soll die Paste noch eine Weile flüssig bleiben, um eine Entfernung überschüssiger Paste von der Oberfläche des gefüllten Körpers zu erleichtern. Sie sollte allerdings nicht so flüssig sein, daß sie wieder aus den Poren austreten und störende Ablauftropfen bilden kann.

Die maximale Korngröße der Paste muß die mittlere Porenweite des zu füllenden Substrates deutlich unterschreiten, um Blockierungen zu vermeiden. Die maximale Korngröße beträgt 0,04 mm, der bevorzugte Bereich liegt zwischen 0,015 und 0,03 mm. Für die Bestimmung der Korngröße wird ein sogenanntes Grindometer verwendet, bei dem ein Pastenanstrich abnehmender Dicke beurteilt wird. Wichtig für die Viskosität der Paste und das Verhalten während der Füllung ist auch die Einhaltung des pH-Wertes zwischen 9 und 12, insbesondere zwischen 10 und 12. Bei einem zu hohen pH-Wert tritt bereits eine so starke Karbonatisierung in der Paste auf, daß die fertigen Elektroden später nicht brauchbar sind

Die günstige Wirkung einer Kobaltdotierung auf die Nickeloxidelektrode ist bekannt. Die Paste wird mit Zusätzen von Kobaltpulver oder mit Kobaltverbindungen in Form der Oxide, Hydroxide, Borate, Phosphate und dergleichen dotiert. Wegen der hohen Dichte und guten Wirksamkeit wird Kobaltpulver besonders bevorzugt. Die Gesamtmenge an Kobalt liegt bei 2 bis 12 Atomprozent, bezogen auf Nickel. Durch die Verwendung des Alkalimetall-Kobalt-Komplexes des HEDP erreicht man nicht nur, wie bereits beschrieben, eine überraschende weitere Steigerung der Nickelhydroxidkonzentration, sondern man kann auch sehr vorteilhaft einen Teil des für die Dotierung gewünschten Kobalts in die Paste einbringen. Das über den Kobaltkomplex eingebrachte Kobalt liegt in ganz besonders gleichmäßiger Verteilung und daher ganz besonders wirkungsvoll in der Elektrode vor.

Die Herstellung der Paste erfolgt am besten in einer Kugelmühle mit Mahlkugeln aus keramischem Material. Falls die Paste mit metallischem Kobalt dotiert werden soll, muß die Mühle wegen der Oxidationsempfindlichkeit des Kobalts im alkalischen Medium luftdicht verschlossen werden. Die optimale Mahldauer zur Herstellung der Paste ist unter anderem abhängig vom Pastenansatz, vom Füllungsgrad der Mühle, von den Mahlkugeln und von der Umdrehungszahl, kann aber an sich leicht ermittelt werden. Im allgemeinen beträgt die Mahldauer bis zu 24 Stunden. Meistens durchläuft die Mischung am Anfang eine Phase mit dünnflüssiger Konsistenz. Zuweilen wird auch dilatantes Verhalten beobachtet, das mit der Mahldauer verschwindet. Die Paste ist fertig, wenn die angegebenen Viskositätsdaten und der Grindometerwert im beanspruchten Bereich liegen.

### Beispiel 1

405 g (36,7 Vol.-%) pulverförmiges Nickeldydroxid, 12,5 g (0,5 Vol.-%) Kobaltpulver (Fa. Riedel-de-Haën) und 182 g (176 ml) 62,8 Vol.-%) einer wässrigen 5 %igen Natriumpolyphosphatlösung mit etwa 17 Phosphoratomen im Polyphospation (Calgon ® 322, der Firma Benickser-Knapsack) wurden in eine 1 l Porzellankugelmühle mit Hilfe von 540 g Mahlkugeln aus Aluminiumoxidkeramik mit 16 mm Durchmesser bei einer Umdrehungszahl von 70/min 16 Stunden lang gemahlen. Aus der Fließkurve der Paste wurden durch Extrapolation und Ausgleichsrechnung folgende rheologische Daten ermittelt (Meßapparatur: Viskosimeter RV 12 der Fa. Haake, Meßeinrichtung MV 1, maximales Geschwindigkeitsgefälle = 300 s⁻¹, T = 20° C): Fließgrenze = 105 Pa, plastische Viskosität = 0,30 Pa.s. Der mit dem Grindometer bestimmte größte Partikeldurchmesser betrug 23 µm.

### Beispiel 2

Anstelle von Natriumphosphatlösung wurde eine wässrige 5 Gew. -%ige Lösung des Dinatriumsalzes der 1-Hydroxiethan-1, 1-diphosphonsäure, Na₂H₂ (HEDP) als Fluid benutzt. Die Mischung in der Kugelmühle hatte die gleiche Zusammensetzung wie in Beispiel 1. Die Mahlbedinungen wurden ebenfalls nicht verändert. Die Viskositätsdaten der fertigen Paste wurden deutlich niedriger erhalten: Fließgrenze = 63 Pa, plastische Viskosität = 0,12 Pa.s. Der pH-Wert der Paste betrug 11,2, die maximale Korngröße 18 µm.

### Beispiel 3

Als Dispergierlösung diente eine 0,2 molare Lösung der Zusammensetzung CoK₁,₅H₀,₅ (HEDP). Um ein Liter dieser Lösung herzustellen, wurden 68,7 g 60-%ige wässrige HEDP-Säure (Turpinal ® SL, der Firma Henkel) in ein Becherglas eingewogen und ca. 800 ml. entionisiertes Wasser zugegeben. 18,6 g Kobalthydroxid wurden unter Rühren darin gelöst. Danach erfolgte unter Rühren die Zugabe von 35 g (23,7 ml) 47-%iger KOH, wodurch sich der pH-Wert der Lösung auf 6 erhöhte. Die Lösung wurde in einen Meßkolben überführt und mit Wasser auf 1 Liter aufgefüllt.

Zur Pastenherstellung wurden 500 g (40 Vol.-%) Nickelhydroxid, 15,5 g (0,55 Vol.-%) Kobaltpulver, und 195,3 g (188,5 ml) (59,45 Vol.-%) Fluid zusammen mit 650 g Mahlkugeln in einer 1 Liter Porzelankugelmühle 20 Stunden mit 70 Umdrehungen/min gerollt. Trotz der erhöhten Konzentration an Nickelhydroxid resultierte eine niedrigviskose Paste mit der Fließgrenze von 18 Pa und der plastischen Viskosität von 0,21 Pa.s. Der Grindometerwert betrug 20 µm. Der pH-Wert lag bei 11.

## Patentansprüche

1. Wässrige Ni(OH)₂-Paste hoher Fließkraft für die Vibrationsfüllung von Schaum- und Faserstruktur-Elektrodengerüsten, mit
einem Gehalt an Nickelhydroxid von 30 bis 50 Vol.-%,
einer maximalen Korngröße von 0,04 mm,
einer plastischen Viskosität von 0,1 bis 1 Pa·s und
einer Fließgrenze zwischen 10 und 120 Pa und
einem Gehalt von 0,5 bis 5 Gew.-%, bezogen auf den Nickelhydroxid-Gehalt, an einem Dispergator aus der Gruppe der wasserlöslichen Salze der Polyphophorsäure,
**dadurch gekennzeichnet,**
daß die Paste einen ph-Wert zwischen 9 und 12 aufweist und die Polyphophorsäuren der wasserlöslichen Salze 3 bis 20, insbesondere 6 bis 20 Phosphoratome pro Molekül besitzen.

2. Wässrige Ni(OH)₂-Paste hoher Fließfahigkeit für die Vibrationsfullung von Schaum- und Faserstruktur-Elektrodengerüst mit
einem Gehalt an Nickelhydroxid von 30 bis 50 Vol.-%,
einer maximalen Korngröße von 0,04 mm,
einer plastischen Viskosität von 0,1 bis 1 Pa·s und
einer Fließgrenze zwischen 10 und 120 Pa
und einem Gehalt von 0,5 bis 5 Gew.-% an einem Dispergator enthält,
**dadurch gekennzeichnet,**
daß die Paste einen ph-Wert zwischen 9 und 12 aufweist und der Dispergator aus der Gruppe der wasserlöslichen Salze von Derivaten der Di- oder Polyphosphonsäure stammt und die Phosphonsäuren 3 bis 20, insbesondere 6 bis 20 Phosphoratome besitzt.

3. Wässrige Ni(OH)₂-Paste nach Anspruch 2,
**dadurch gekennzeichnet,**
daß es sich bei den Derivaten der Di- oder Polyphosphonsäure um alkylierte oder arylierte Phosphonsäuren handelt.

4. Wässrige Ni(OH)₂-Paste nach Anspruch 3,
**dadurch gekennzeichnet,**
daß die Derivate der Di- oder Polyphosphonsäuren nicht mehr als zwei C-Atome pro P-Atom im Molekül besitzen.

5. Wässrige Ni(OH)₂-Paste nach einem oder mehreren der Ansprüche 1 bis 4,
**dadurch gekennzeichnet,**
daß die wasserlöslichen Salze der Polyphosphorsäuren oder die Derivate der Di- oder Polyphosphonsäuren Alkalisalze sind.

6. Wässrige Ni(OH)₂-Paste nach Anspruch 2, 3, 5 oder 5,
**dadurch gekennzeichnet,**
daß die Phoshonsäure eine 1-Hydroxyethan-1, 1-Diphosphonsäure oder Aminotrimethylenphosphonsäure ist.

7. Wässrige Ni(OH)₂-Paste nach Anspruch 1 bis 6,
**dadurch gekennzeichnet,**
daß sie Kobaltpulver und/oder Kobaltverbindungen aus der Klasse der Oxide, Hydroxide, Borate oder Phosphate enthält.

8. Wässrige Ni(OH)₂-Paste nach einem oder mehreren der Ansprüche 1 bis 7,
**dadurch gekennzeichnet,**
daß der Gesamtkobaltgehalt 2 bis 12 Atomprozente, bezogen auf Nickel, beträgt.

9. Wässrige Ni(OH)₂-Paste nach einem oder mehreren der Ansprüche 2 bis 8,
**dadurch gekennzeichnet,**
daß der Dispergator ein Alkalimetall-Kobalt-Komplex der 1-Hydroxiethan-1 , 1-Diphosphonsäure (HEDP) der Formel
CoₓM_{y}H_{z} (HEDP)
ist, in der M ein Alkalimetall bedeutet und x zwischen 0,5 und 1,25, y zwischen 0,5 und 1,5 und z zwischen 0,2 und 2 liegt, mit der Maßgabe, daß 2 x + y + z = 4 sind.

## Claims

1. Aqueous Ni(OH)₂ paste of high yield force for the vibration filling of foam-structure and fibre-structure electrode frameworks having a content of nickel hydroxide of 30 to 50% by volume, a maximum particle size of 0.04 mm, a plastic viscosity of 0.1 to 1 Pa.s and a yield value of between 10 and 120 Pa, and a content of 0.5 to 5% by weight, based on the nickel hydroxide content, of a dispersant from the group comprising the water-soluble salts of polyphosphoric acid, characterized in that the paste has a pH between 9 and 12 and the polyphosphoric acids of the water-soluble salts have 3 to 20, in particular 6 to 20, phosphorus atoms per molecule.

2. Aqueous Ni(OH)₂ paste of high yield force for the vibration filling of foam-structure and fibre-structure electrode frameworks having a content of nickel hydroxide of 30 to 50% by volume, a maximum particle size of 0.04 mm, a plastic viscosity of 0.1 to 1 Pa.s and a yield value of between 10 and 120 Pa, and contains a content of from 0.5 to 5% by weight of a dispersant, characterized in that the paste has a pH of between 9 and 12 and the dispersant originates from the group comprising the water-soluble salts of derivatives of the di- or polyphosphonic acids and the phosphonic acids contain 3 to 20, in particular 6 to 20 phosphorus atoms.

3. Aqueous Ni(OH)₂ paste according to Claim 2, characterized in that the derivatives of the di- or polyphosphonic acid are alkylated or arylated phosphonic acids.

4. Aqueous Ni(OH)₂ paste according to Claim 3, characterized in that the derivatives of di- or polyphosphonic acids do not contain more than two C atoms per P atom in the molecule.

5. Aqueous Ni(OH)₂ paste according to one or more of the Claims 1 to 4 characterized in that the water-soluble salts of polyphosphoric acids or the derivatives of the di-or polyphosphonic acids are alkali salts.

6. Aqueous Ni(OH)₂ paste according to Claim 2, 3, 4 or 5, characterized in that the phosphonic acid is a 1-hydroxyethane-1, 1-diphosphonic acid or aminotrimethylenephosphonic acid.

7. Aqueous Ni(OH)₂ paste according to Claim 1 to 6, characterized in that it contains cobalt powder and/or cobalt compounds from the category comprising the oxides, hydroxides, borates or phosphates.

8. Aqueous Ni(OH)₂ paste according to one or more of Claims 1 to 7, characterized in that the total cobalt content is 2 to 12 atom percent, based on nickel.

9. Aqueous Ni(OH)₂ paste according to one or more of Claims 2 to 8 characterized in that the dispersant is an alkali-metal/cobalt complex of 1-hydroxyethane-1,1-disphosphonic acid (HEDP) of the formula
CoₓM_{y}H_{z}(HEDP),
in which M denotes an alkali metal and x is between 0.5 and 1.25, y is between 0.5 and 1.5 and z is between 0.2 and 2, with the proviso that 2 x + y + z = 4.

## Revendications

1. Pâte aqueuse de Ni(OH)₂ de grande fluidité pour le remplissage par vibrations de corps d'électrodes de structure fibreuse, qui a :
- une teneur en hydroxyde de nickel de 30 à 50 % en volume,
- une granulométrie maximale de 0,04 mm,
- une viscosité plastique de 0,1 à l Pa.s et
- une limite de fluage entre 10 et 120 Pa, et
- une teneur de 0,5 à 5 % en poids, rapportée à la teneur d'hydroxyde de nickel, d'un agent de dispersion faisant partie du groupe des sels, solubles dans l'eau, de l'acide polyphosphorique,
caractérisée en ce que la pâte a un pH compris entre 9 et 12 et les acides polyphosphoriques des sels solubles dans l'eau contiennent de 3 à 20, notamment de 6 à 20 atomes de phosphore par molécule.

2. Pâte aqueuse de Ni(OH)₂ de grande fluidité pour le remplissage par vibrations de corps d'électrodes de structure fibreuse, qui a :
- une teneur en hydroxyde de nickel de 30 à 50 % en volume,
- une granulométrie maximale de 0,04 mm,
- une viscosité plastique de 0,1 à 1 Pa.s et
- une limite de fluage entre 10 et 120 Pa, et
- une teneur de 0,5 à 5 % en poids d'un agent de dispersion,
caractérisée en ce que la pâte a un pH compris entre 9 et 12 et l'agent de dispersion fait partie du groupe des sels, solubles dans l'eau, de dérivés des acides diphosphonique ou polyphosphonique et les acides phosphoriques contiennent de 3 à 20, notamment de 6 à 20 atomes de phosphore.

3. Pâte aqueuse de Ni(OH)₂ selon la revendication 2, caractérisée en ce que les dérivés des acides diphosphonique ou polyphosphonique sont des acides phosphoniques alkylés ou arylés.

4. Pâte aqueuse de Ni(OH)₂ selon la revendication 3, caractérisée en ce que les dérivés des acides diphosphonique ou polyphosphonique ne contiennent pas plus de deux atomes de carbone par atome de phosphore dans la molécule.

5. Pâte aqueuse de Ni(OH)₂ selon une ou plusieurs des revendications 1 à 4, caractérisée en ce que les sels, solubles dans l'eau, des acides polyphosphoriques ou les dérivés des acides diphosphonique ou polyphosphoniques sont des sels alcalins.

6. Pâte aqueuse de Ni(OH)₂ selon la revendication 2, 3, 4 ou 5, caractérisée en ce que l'acide phosphonique est un acide 1-hydroxyéthane-1, 1-diphosphonique ou bien un acide aminotriméthylène phosphonique.

7. Pâte aqueuse de Ni(OH)₂ selon une des revendications 1 à 6, caractérisée en ce qu'elle contient de la poudre de cobalt et/ou des composés de cobalt rentrant dans la classe des oxydes, des hydroxydes, des borates ou des phosphates.

8. Pâte aqueuse de Ni(OH)₂ selon une ou plusieurs des revendications 1 à 7, caractérisée en ce que la teneur totale en cobalt s'élève à 12 pourcent atomique, par rapport au nickel.

9. Pâte aqueuse de Ni(OH)₂ selon une ou plusieurs des revendications 2 à 8, caractérisée en ce que l'agent de dispersion est un complexe métal alcalin - cobalt de l'acide 1-hydroxyéthane-1, 1-diphosphonique (HEDP) de la formule
CoₓM_{y}H_{z} (HEDP)
où M désigne un métal alcalin et x est compris entre 0,5 et 1,25, y entre 0,5 et 1,5 et z entre 0,2 et 2, avec la relation : 2 x + y + z = 4.
